# EUROPEAN PATENT APPLICATION

(11) **EP 4 831 314 A1**
(43) Date of publication of application: **28.10.2026**
(21) Application number: 24907987.2
(22) Date of filing: 16.12.2024
(51) Int. Cl.: C22B 5/02, B09B 3/40, H01M 10/54, B09B 101/16

(54) **HIGH-TEMPERATURE REDUCTION DEVICE FOR WASTE BATTERY RECYCLING**

(30) Priority: 18.12.2023 KR 20230184554
(71) Applicant: POSCO Holdings Inc., Pohang-si, Gyeongsangbuk-do 37859 (KR)
(72) Inventor: LEE, Juseung, Pohang-si, Gyeongsangbuk-do 37859 (KR); PARK, Joongkil, Pohang-si, Gyeongsangbuk-do 37859 (KR); PARK, Chonglyuck, Pohang-si, Gyeongsangbuk-do 37859 (KR); KIM, Wan-Yi, Pohang-si, Gyeongsangbuk-do 37859 (KR); HAN, Sangwoo, Pohang-si, Gyeongsangbuk-do 37859 (KR); PARK, Junyong, Pohang-si, Gyeongsangbuk-do 37859 (KR)
(74) Representative: Pfenning, Meinig & Partner mbB
(86) International application number: PCT/KR2024/020429
(87) International publication number: WO 2025/135704

(57) **Abstract**

The present disclosure relates to a high-temperature reduction apparatus for recycling waste batteries, comprising: a charging unit for inputting a raw material; a heating unit for heating the raw material input from the charging unit; a cooling unit for cooling a heat-treated product; a discharging unit for discharging a reactant cooled by the cooling unit; and a monitoring unit including a first measuring unit for measuring an in-furnace level of the raw material input by the charging unit and a second measuring unit for measuring a level of the raw material, input by the charging unit, within the heating unit.

## Description

### [Technical Field]

The present disclosure relates to waste batteries, and more particularly to a high-temperature reduction apparatus for recycling waste batteries.

### [Background Art]

As demand for electric vehicles increases worldwide, the issue of processing waste batteries generated from the electric vehicles is emerging as a social issue. In the case of lithium secondary batteries, which are the main raw materials of the waste batteries, organic solvents, explosive substances, and heavy metals such as Ni, Co, Mn, and Fe are contained therein; however, since Ni, Co, Mn, and Li have high scarcity value as valuable metals, recovery and recycling processes after the disposal of lithium secondary batteries are emerging as important research fields.

For typical recycling of the waste batteries, black powder, in which a cathode material and an anode material are mixed, is extracted through processes of shredding, grinding, gravity separation, and magnetic separation of the waste batteries that have reached the end of their lifespan. The black powder includes, for example, oxides of nickel, cobalt, manganese, lithium, and aluminum, which are cathode materials, and graphite, which is an anode material, and mixtures thereof, and some impurities such as aluminum and copper. Hydrometallurgical processes and pyrometallurgical processes are widely utilized as methods for recovering valuable metals from the black powder.

The said hydrometallurgical process produces NiSO4, CoSO4, MnSO4, and Li2CO3 through leaching, solvent extraction, and lithium production. When the said black powder is treated by the hydrometallurgical process, there is a problem in that graphite, which is an anode material included in the said black powder, does not dissolve in a strong acid environment, thereby requiring an excessive leaching process time, and there is a further problem in that a yield is reduced as the said black powder is separated together with the graphite.

As such, a high-temperature reduction apparatus is a core facility in a pyrometallurgical recycling process of waste batteries. It is very important to readily control the temperature of the input raw material to a target temperature in order to convert waste batteries into a desired reactant using the facility and supply the same to a subsequent process to ensure a high recovery rate of valuable metals.

However, due to the characteristics of the raw material of the high-temperature reduction apparatus, there is a problem that the amount of change in internal temperature and the volatility of exhaust gas from the raw material increase according to the raw material level in the furnace.

### [Summary of Invention]

### [Technical Problem]

The technical problem to be solved by the present disclosure is to provide a method for operating a high-temperature reduction apparatus for recycling waste batteries, wherein the method minimizes variability of internal temperature deviations according to a raw material level in a furnace and stably performs treatment of exhaust gas from the raw material.

### [Technical Solution]

According to one embodiment of the present disclosure, a high-temperature reduction apparatus for recycling waste batteries may comprise: a charging unit for inputting raw material; a heating unit for heating the raw material input from the charging unit; a cooling unit for cooling a heat-treated product; a discharging unit for discharging a reactant cooled by the cooling unit; and a monitoring unit including a first measuring unit for measuring a level within a furnace of the raw material input by the charging unit and a second measuring unit for measuring a temperature of the raw material within the heating unit. In one embodiment, the high-temperature reduction apparatus may further comprise an environmental treatment unit for treating exhaust gas generated by a reaction of the raw material in the heating unit.

In one embodiment, the monitoring unit may comprise a third measuring unit for measuring the temperature of the exhaust gas. In one embodiment, an environmental treatment unit for treating the exhaust gas may comprise a piping unit through which the exhaust gas generated from the heating unit passes.

In one embodiment, an integrated control unit configured to detect a signal from the monitoring unit and to control an input amount of the raw material of the charging unit or a temperature of the heating unit may be comprised. In one embodiment, the integrated control unit may control the charging unit to additionally input the raw material when it is measured by the third measuring unit that the temperature of the exhaust gas is 120 °C or lower.

In one embodiment, the integrated control unit may control the charging unit to additionally input the raw material when the first measuring unit measures that the charging level of the raw material is 70 to 80% or less based on 100% of the total height of the heating unit. In one embodiment, the integrated control unit may control the temperature of the heating unit such that a flake-shaped reactant of 3,000 µm or more discharged through the discharging unit is not generated.

In one embodiment, the first measuring unit may measure the level of the raw material according to at least one of ultrasound, LiDAR, and radar. In one embodiment, there may be comprised a pre-heat treatment section for preheating the raw material input from the charging unit and a high-temperature heat treatment section for heating to a higher temperature than the pre-heat treatment section, and the high-temperature heat treatment section may comprise a heat treatment section in which heat treatment of the raw material is performed in a temperature range of 1,150 to 1,400 °C.

In one embodiment, the high-temperature heat treatment unit may include two or more heat treatment sections in a vertical or horizontal direction. In one embodiment, at least a portion of the pre-heat treatment section may include a space portion in which the raw material is not filled.

In one embodiment, the raw material may be input into the charging unit at a rate of 15 to 35 mm/min. In one embodiment, the integrated control unit may be adjusted to control the monitoring unit so that the temperature of the heating unit is controlled within a range of 800 to 1,400 °C. In one embodiment, the second measuring unit may comprise a plurality of units and may measure the temperatures of the pre-heat treatment section and the high-temperature heat treatment section, respectively.

### [Advantageous Effects]

According to one embodiment of the present disclosure, a high-temperature reduction apparatus for recycling waste batteries comprises a measuring unit and a control unit for measuring a raw material charging level and an internal temperature of a furnace, and is configured to minimize the variability of internal temperature deviation according to the raw material level in the furnace and stably perform treatment of exhaust gas from the raw material.

According to another embodiment of the present disclosure, there is provided a battery treatment method for waste battery recycling, the waste battery treatment method having the above-mentioned advantages.

### [Brief Description of Drawings]

FIG. 1a illustrates a high-temperature reduction apparatus for recycling waste batteries according to one embodiment of the present disclosure, and FIG. 1b illustrates a high-temperature reduction apparatus according to another embodiment of the present disclosure.
FIG. 2 is a graph showing changes in raw material charging height and temperature over time of a high-temperature reduction apparatus according to an embodiment of the present disclosure.
FIG. 3 shows changes in raw material charging height and temperature of a high-temperature reduction apparatus over time according to a comparative example of the present disclosure.
FIG. 4 is a graph showing changes in raw material charging height and temperature over time of a high-temperature reduction apparatus according to one embodiment of the present disclosure.
FIGS. 5a and 5b are photographs of recovered reactants according to one embodiment of the present disclosure.

### [Detailed Description]

Terms such as first, second, and third are used to describe various parts, components, regions, layers, and/or sections, but are not limited thereto. These terms are used only to distinguish one part, component, region, layer, or section from another part, component, region, layer, or section. Therefore, a first part, component, region, layer, or section described below may be referred to as a second part, component, region, layer, or section without departing from the scope of the present disclosure.

The terminology used herein is for the purpose of describing particular embodiments only and is not intended to be limiting of the invention. As used herein, the singular forms are intended to include the plural forms as well, unless the context clearly indicates otherwise. The term 'comprising' as used in the specification specifies the presence of stated features, regions, integers, steps, operations, elements, and/or components, but does not preclude the presence or addition of one or more other features, regions, integers, steps, operations, elements, components, and/or groups thereof.

When a part is referred to as being "on" or "above" another part, it may be directly on or above the other part, or another part may be interposed therebetween. In contrast, when a part is referred to as being "directly on" another part, no other part is interposed therebetween.

Unless otherwise defined, all terms including technical and scientific terms used herein have the same meaning as commonly understood by one of ordinary skill in the art to which the present invention belongs. Terms defined in commonly used dictionaries are further interpreted as having meanings consistent with the relevant technical literature and the present disclosure, and are not to be interpreted in an idealized or overly formal sense unless expressly so defined herein.

Hereinafter, embodiments of the present disclosure will be described in detail. However, these are presented as examples, the present disclosure is not limited thereto, and the present disclosure is defined only by the scope of the claims to be described later.

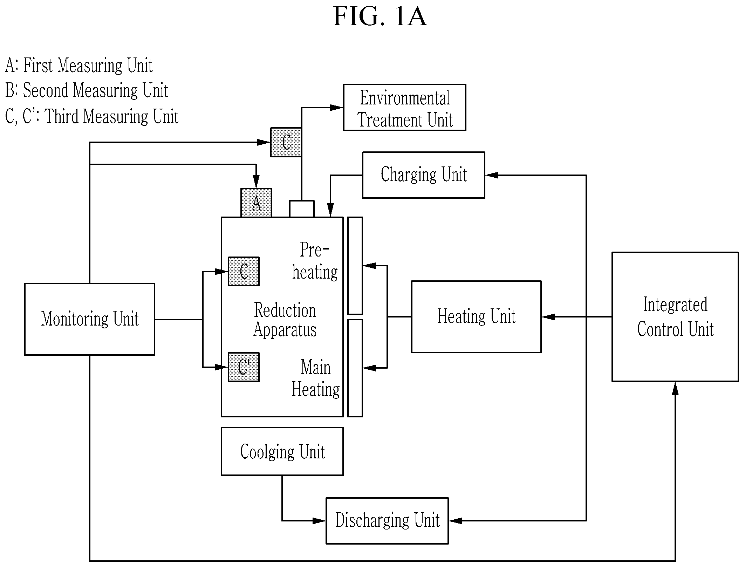

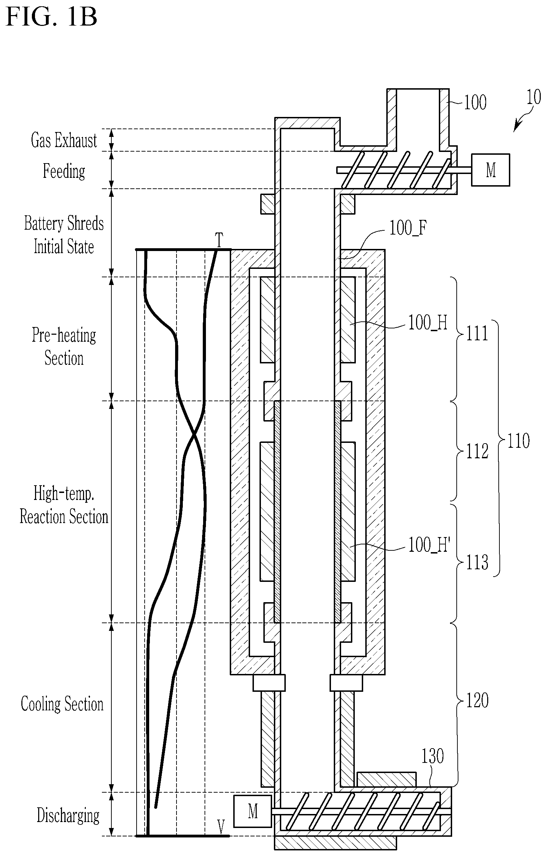

FIGS. 1a and 1b are a schematic diagram and a cross-sectional view, respectively, of a high-temperature reduction apparatus for recycling waste batteries according to one embodiment of the present disclosure.

Referring to FIGS. 1a and 1b, a high-temperature reduction apparatus 10 for recycling waste batteries according to one embodiment of the present disclosure comprises a charging unit 100 for inputting raw materials, a heating unit 110 for heating the raw materials input from the charging unit 100, a cooling unit 120 for cooling a heat-treated product, a discharging unit 130 for discharging a reactant cooled by the cooling unit 120, and a monitoring unit. The high-temperature reduction apparatus 10 of the present disclosure refers to a furnace utilized in a step of inputting battery shreds into a furnace that may raise the battery shreds to a high temperature to raise the temperature of the battery shreds to a temperature above a melting point, and relates to maintaining a uniform temperature distribution within the furnace through the monitoring unit.

The high-temperature reduction apparatus 10 may be configured to shred waste batteries and perform high-temperature reduction on shredded waste batteries that have undergone gravity separation, magnetic separation, or classification as necessary, to produce a reactant comprising cathode materials including oxides of nickel, cobalt, manganese, lithium, aluminum, or oxygen; anode materials including graphite and mixtures thereof; and certain impurities such as aluminum and copper.

The charging unit 100 is a member for inputting a raw material, and the raw material may be the aforementioned waste battery shredded material. The waste battery shredded material refers to a material that is a base material of battery shredded material or the shredded material itself. The base material of the battery shredded material may include end-of-life batteries, waste batteries, and waste materials generated during a manufacturing process of lithium-ion batteries.

Specifically, the waste battery may include positive electrode materials such as scrap, jelly rolls, and slurry constituting the waste battery, defective products generated during the manufacturing process, residues within the manufacturing process, and generated debris. The base material for the battery shreds may then be manufactured into the battery shreds through a shredding process. The battery shreds itself may be a finished shredded product such as black powder. In this way, by recycling the waste battery, the battery shreds is manufactured, providing environmental and economic advantages.

In one embodiment, the raw material may be introduced into the charging unit 110 at a rate of 15 to 35 mm/min. Specifically, the raw material may be introduced at a rate of 20 to 25 mm/min. As the raw material is introduced while satisfying the aforementioned range, the raw material may easily react in the heating unit to form a target reactant. When the raw material is introduced faster than the aforementioned range, there is a problem in that the rate (e.g., reaction rate) decreases due to a short reaction time. When the raw material is introduced slower than the aforementioned range, there is a problem in that an over-reaction product is discharged due to an excessively long reaction time.

In one embodiment, the weight ratio of C/Ni in the raw material may be 20 or more. The weight ratio of C/Ni specifically refers to a value obtained by dividing the weight % of carbon by the weight % of nickel. In one embodiment, since the weight ratio of C/Ni in the raw material satisfies the aforementioned range, the size of powder particles is reduced, so that spherical reactants in a particle size range of 500 to 3,000 µm, which is an optimal particle size range for acid treatment in a subsequent process, may be formed. When the weight ratio of C/Ni in the raw material is out of the aforementioned range, it is difficult to form spherical crushed particles, and as they are formed as a reactant in a lumped state, there is a problem in that reduction by carbon is not completely achieved.

In one embodiment, the charging unit 100 may further include a pusher or a screw. The pusher may be a configuration for facilitating the feeding of the raw material charged through the charging unit 100.

The heating unit 110 is a member for heating the raw material input from the charging unit 100. The heating unit 110 may raise the waste battery shreds to a temperature equal to or higher than a melting point by inputting the raw material, such as the waste battery shreds, into a furnace that may raise a temperature to a high temperature. As such, through the heating unit 110, a Ni-Co-Mn alloy including valuable metals and lithium oxide are generated, so that the valuable metals may be recovered in a subsequent process.

In one embodiment, the heating unit 110 may be characterized by raising the temperature of a raw material input from the charging unit 100 at a heating rate of 1 to 10 °C/min. Specifically, the heating may be performed at a heating rate in a range of 2.0 to 5.0 °C/min.

In one embodiment, heating in the heating unit 110 may be performed in a temperature range of 800 to 1,400 °C. By performing heating at the temperature rising rate and within the temperature range, a Ni-based alloy is formed as spherical particles of 100 to 3,000 µm, which may increase the recovery rate of valuable metals and Li.

Specifically, the heating unit 110 may include at least one induction coil. Specifically, the heating unit 110 may include one induction coil, or a plurality of induction coils may be used. In FIG. 1a, one induction coil is used for a pre-heat treatment section 111, and additional induction coils are used for an endothermic section 112 and a melting section 113.

In one embodiment, the heating unit 110 may comprise a pre-heat treatment section 111 for preheating the introduced raw material and a high-temperature heat treatment section (not shown) for heating to a temperature higher than that of the pre-heat treatment section 111. The high-temperature heat treatment section may be a high-temperature reduction section, which is a member for reducing the raw material by heating to a temperature higher than that of the pre-heat treatment section 111. In one embodiment, the high-temperature heat treatment section may include two or more heat treatment sections in a vertical or horizontal direction.

In one embodiment, the high-temperature heating section may comprise an endothermic section 112 and a melting section 113 that heats in a higher temperature range than the endothermic section 112 to form at least a portion of a molten layer. The heating unit 110 has an advantage in that it may increase the recovery rate of valuable metals by including sections with different temperatures.

The pre-heat treatment section 111 may be heated in a temperature range of 800 °C or lower. Specifically, the pre-heat treatment section 111 may be heated in a temperature range of 700 °C or lower. The pre-heat treatment section 111 is primarily intended to remove the electrolyte and the separator from the waste battery shreds by preheating the waste battery shreds, which are the raw material, in the aforementioned range.

The endothermic section 112 may be heated in a higher temperature range than the pre-heat treatment section 111. Specifically, an endothermic reaction may occur in a range of 700 to 1200 °C, more specifically 700 to 900 °C, and even more specifically 800 to 900 °C. Specifically, in the endothermic section 112, an endothermic reaction may occur through a Boudouard Reaction that converts CO2 gas into 2CO gas in the above-mentioned temperature range. By including the endothermic section 112, the high-temperature reduction apparatus 10 may have an environmental advantage by reducing carbon dioxide.

The melting section 113 may be heated in a higher temperature range than the endothermic section 112. Specifically, it may be heated in a temperature range of 1,400 °C or lower, more specifically in a temperature range of 1,150 to 1,400 °C or lower. In the melting section 113, any one metallic material selected from the group consisting of nickel, cobalt, manganese, and copper may be melted and arranged in a spherical shape. The melting section 113 is the highest temperature reaction section within the heating unit 110 and is a member in which heat treatment is performed in the above-mentioned temperature range so that a Ni-Co-Mn alloy including valuable metals and Li oxide may be generated.

Specifically, as heat treatment is performed within the aforementioned temperature range, the melting section 113 is a section where shredded material, in which a cathode, an anode, or a separator is reduced in a stacked form, is reduced into spherical droplets having a shape suitable for reaction in a subsequent process for extracting valuable metals, for example, a hydrometallurgical process.

As the melting section 113 is heated in the above-mentioned temperature range, a recovery rate of Li may satisfy a range of 40 to 70%, specifically 55 to 60%, and a recovery rate of the Ni-Co-Mn alloy may satisfy a range of 55 to 95%, specifically 85 to 95%, and more specifically 85 to 90%. When the temperature of the melting section 113 exceeds the upper limit of the above-mentioned range, there is a problem that the Li recovery rate becomes excessively low, and when the temperature falls below the lower limit of the above-mentioned range, there is a problem that the recovery rate of the Ni-Co-Mn alloy becomes excessively low. As such, since the melting section 113 is operated in the above-mentioned temperature range, there is an advantage that the recovery rate of the Ni-Co-Mn alloy may be increased while simultaneously increasing the recovery rate of Li.

In one embodiment, the heating unit 110 comprises a heating furnace 110_F and a heating module 110_H. The heating furnace 110_F refers to a passage through which the input raw material passes through the heating unit 110. The heating module 110_H refers to a member that applies thermal energy to the heating furnace 110_F.

In the heating furnace 110_F, when temperatures are measured at arbitrary positions in minor-axis and major-axis directions of a cross-section of the heating furnace 110_F relative to the center of the cross-section, a temperature difference between the center and the arbitrary positions may be 250 °C or less. The cross-section of the heating furnace 110_F refers to a section taken in a direction that deviates from (or is non-parallel to) a direction in which the raw material moves, for example, an intersecting or perpendicular direction.

Specifically, the temperature difference may be a difference between a maximum temperature and a minimum temperature. When the temperature difference between the center and the arbitrary position falls outside the temperature range, uniform heat transfer to the heating furnace 110_F is not easily achieved, which leads to a problem in that a recovery rate of valuable metals is decreased.

In one embodiment, a heating module 110_H may comprise at least one within a heating unit 110, and the heating module 110_H may apply thermal energy by a method such as induction heating, gas heating, or resistance heating. In one embodiment, the heating module 110_H may have a coil shape as a means for supplying the thermal energy. In one embodiment, a wire of the coil may have, as a non-limiting example, a cross-section of any one selected from the group consisting of a circle, a square, a rectangle, an oval, a triangle, a trapezoid, a diamond, and a star shape.

In one embodiment, in the coil of the heating module 110_H, a pitch distance of the coil may become narrower as a distance from the central region of the coil increases. The central region of the coil refers to a region including a midpoint based on a longitudinal direction in which the coil is wound. The pitch of the coil refers to a distance between two effective coil sides when the coil is wound.

In the case of induction heating, the coil inductance is proportional to the number of turns of the coil. Specifically, the coil inductance is proportional to the number of times the coil is wound. More specifically, when the coil is wound a greater number of times, the applied thermal energy increases, and when the coil is wound a smaller number of times, the applied thermal energy decreases.

Using such a principle, the coil of the heating module 110_H according to the present disclosure is implemented such that as the distance from the central region of the coil increases, the pitch distance of the coil narrows, thereby providing an advantage in that heat in the central region, where thermal energy was conventionally concentrated, may be dissipated. In one embodiment, the heating module 110_H may be disposed in each of the pre-heat treatment section 111, the endothermic section 112, and the melting section 113 to control the temperature of the heating unit 110.

Heating in the heating unit 110 may be performed under a gas atmosphere containing oxygen, and the oxygen may be contained in a volume fraction of 5 vol% or less. In one embodiment, the heating in the heating unit 110 may be performed in an atmosphere with an oxygen partial pressure of 0.1 atm or less. As heating proceeds in a gas atmosphere containing a portion of oxygen in the aforementioned range, lithium oxide for lithium recovery may be easily formed, thereby improving the recovery rate of valuable metals.

In one embodiment, the pre-heat treatment section 111 in the heating unit 110 may be operated at a power of 12.0 kW or more. Specifically, the pre-heat treatment section 111 may be operated at a power of 12.0 to 15.0 kW. More specifically, the power may be 12.0 to 14.0 kW.

In one embodiment, the melting section 113 in the heating unit 110 may be operated at a power of 16.0 kW or more. Specifically, the power may be in the range of 16.0 to 19.0 kW. More specifically, the power may be in the range of 17.5 to 18.5 kW.

The power applied in the pre-heat treatment section 111 and the melting section 113 may mean the minimum energy required for heating the reactant, and as the power satisfies the range, heat treatment may be performed in a target temperature range.

In one embodiment, the residence time of the reactant in the heating unit 110 may be 5 to 7 hours. The residence time may refer to a value obtained by dividing the total length of the heating unit 110 by the travel distance of the reactant per hour. For example, in the heating unit 110 producing the reactant at 65 kg/hr, when the length of the heating unit 110 is 285 cm, the reactant moves at about 44 cm per hour and passes through the heating unit 110 after remaining therein for about 6.5 hours.

When performed within the residence time of the heating unit 110, there is an advantage in that the recovery rate of Li and valuable metals such as Ni, Co, and Mn in the heating unit 110 may be improved. When the residence time is outside the aforementioned range, not only may Li be lost, but the particle size of the reduced valuable metals may also increase, which causes a problem in that the post-process leaching time is prolonged.

In one embodiment, a target temperature of the pre-heat treatment section 111 in the heating unit 110 may satisfy the following Equation 1. <Equation 1> ${T}_{111} \geq 0.813 \left(x/\left(Cp\times m\right)+25\right)$

(In Equation 1, x is the input energy [W], Cp is the specific heat [J/Kg- °C], and m is the mass flow rate [Kg/s])

In an embodiment, a target temperature of the melting section 113 in the heating unit 110 may satisfy the following Equation 2. <Equation 2> ${T}_{113} \geq 0.4 \left(x/\left(Cp\times m\right)+700\right)$

(In Equation 2, x is the input energy [W], Cp is the specific heat [J/Kg- °C], and m is the mass flow rate [Kg/s])

Equation 1 and Equation 2 specifically represent target temperatures of the pre-heat treatment section 111 and the melting section 113 in the heating unit 110 and a minimum value of supplied energy of a reactant being input. By inputting the minimum energy of Equation 1 and Equation 2, target temperatures of the pre-heat treatment section 111 and the melting section 113 may be reached. In an embodiment, x in Equation 1 may be 12,000 W or more. In an embodiment, x in Equation 2 may be 16,000 W or more.

By controlling the target temperature according to the energy supplied to the reactants as in Equation 1 and Equation 2, there is an advantage in that the recovery rate of valuable metals such as Li, Ni, Co, and Mn may be improved. When heating is performed in a temperature range outside the range of Equation 1 and Equation 2, there is a problem in that the recovery rate of valuable metals decreases.

The cooling unit 120 includes a step of cooling a reactant generated through the heating unit 110 to 100 °C or lower. The reactant may be a reduction reaction material generated through the heating unit 110. As cooling proceeds in the above-mentioned range, the cooling unit 120 may stabilize the reactant heated in the heating unit 110.

The discharging unit 130 is a member from which a reactant containing valuable metals, which has been cooled through the cooling unit 120, is discharged. The reactant containing valuable metals may comprise a Ni-Co-based alloy, a lithium compound, carbon, and other residual impurities. The impurities may include, for example, impurities such as Al, Cu, P, Na, Mg, and F.

In one embodiment, in the high-temperature reduction apparatus 10, the amount of the reactant recovered from the raw material may be 60% or more based on the total weight of the raw material. Specifically, the recovery rate of the reactant after heat treatment may be 60% to 65% or more relative to the weight of the waste battery shreds before being input into the furnace. In one embodiment, Ni-Co in the reactant after heat treatment may be 40% or more of the total weight of the reactant.

The high-temperature reduction apparatus 10 may include a magnetic separation unit configured to magnetically separate the alloy recovered after cooling. The magnetic separation unit may be disposed within the discharging unit 130 or may be disposed separately from the discharging unit 130.

In one embodiment, the magnetic separation unit may magnetically separate a Ni-Co based alloy with a magnetic field strength of 100 Gauss or more. By performing magnetic separation at 100 Gauss or more, there is an advantage of increasing the recovery rate of a valuable metal alloy by separately recovering a Co-based alloy having magnetism.

In one embodiment, the discharging unit 130 may further include a stepper. The stepper may be, for example, a member having elasticity, and may serve as a means for more precisely and easily discharging the amount of reactant discharged from the discharging unit 130.

In one embodiment, the high-temperature reduction apparatus 10 may further include at least one suction unit. The suction unit may be a member for controlling gas concentration and heat within the furnace and for providing ventilation. The suction unit may be disposed, for example, at an input unit that is a front-end member of the heating unit 110 or in a section of the cooling unit 120 that is a rear-end member of the heating unit 110.

The monitoring unit may include a first measuring unit for measuring an in-furnace level of the raw material input by the charging unit 100 that inputs the raw material, and a second measuring unit for measuring a temperature within the heating unit of the raw material input by the charging unit 100. Specifically, the monitoring unit may check a temperature of the heating unit in the high-temperature reduction apparatus or a level of the raw material charged in the heating unit.

In one embodiment, the first measuring unit may measure the level of the raw material according to at least one of ultrasound, LiDAR, and radar. Specifically, the first measuring unit may determine characteristics of the shredded material, such as tap density of the battery shreds charged into the heating unit 110 from the charging unit 100.

In one embodiment, the first measuring unit may measure shrinkage characteristics of the raw material charged from the charging unit 100. In one embodiment, the first measuring unit measures a charging level of the raw material, and when the charging level is 70 to 80% or less of the total height of the furnace, the charging unit 110 may be controlled such that more raw material is input. Specifically, the first measuring unit may be configured such that more raw material is input when the charging level of the raw material is 70 to 80% or less based on the total height of the heating unit 110.

In one embodiment, the pre-heat treatment section 111 may include a space in at least a portion thereof in which the raw material is not filled. Specifically, the charging level of the raw material may be controlled such that the raw material does not fill 100% of the space of the pre-heat treatment section 111 and heat is discharged to the outside through an environmental treatment unit. By maintaining the charging level within the above-mentioned range, heat released above the raw material may be kept uniform, and problems such as exhaust gas flowing toward the environmental treatment unit accumulating in and clogging a pipe connected to the environmental treatment unit may be prevented.

In one embodiment, the second measuring unit may include, for example, a temperature measuring sensing unit such as a thermometer. The second measuring unit is for measuring the temperature of the furnace in the heating unit 110, and for example, it may be disposed outside the heating unit 110 to measure the temperature of the furnace.

In one embodiment, the apparatus may include an environmental treatment unit for treating exhaust gas generated by a reaction of the raw material in the heating unit 110. The environmental treatment unit may be a member for collecting by-products generated by the heating process of the raw material in the heating unit 110, for example, gases such as carbon dioxide or fluorine-containing gases. However, by-products may accumulate and clog a pipe as they are cooled in the pipe through which gas or dust is discharged during a high-temperature reduction process of battery shreds, which may increase the internal pressure of the furnace and prevent gas discharge, thereby potentially causing the environmental treatment unit to fail to function. To solve this, it is important to maintain an appropriate temperature of the piping unit.

In one embodiment, the piping unit connected to the environmental treatment unit may be controlled to a temperature of 100 °C or higher. Specifically, the temperature may be controlled to a temperature of 120 °C or higher. When the temperature is maintained lower than the aforementioned range, there is a problem that gas or dust accumulates in the piping unit due to cooling. The aforementioned problem may be addressed by monitoring the temperature of the exhaust gas through the first to third measuring units and increasing a raw material charging level when the exhaust gas temperature is low, thereby increasing the temperature of the exhaust gas.

In one embodiment, the monitoring unit may include a third measuring unit for measuring a temperature of the exhaust gas. In one embodiment, the third measuring unit may measure the temperature of the exhaust gas when it is discharged to the environmental treatment unit. The third measuring unit functions to maintain the temperature of the exhaust gas at an appropriate temperature so that the exhaust gas may smoothly escape to the environmental treatment unit while preventing clogging of the piping unit, and may also prevent the temperature in the heating unit 110 from becoming excessively high.

In one embodiment, an integrated control unit may detect a signal from the monitoring unit to control the input amount of the raw material of the charging unit 100 or the temperature of the heating unit 110. The integrated control unit may control the monitoring unit including the first measuring unit, the second measuring unit, and the third measuring unit, the charging unit 100, and the heating unit 110. Specifically, the integrated control unit may detect signals received from the first measuring unit, the second measuring unit, and the third measuring unit to control the charging unit 100 and the heating unit 110.

When it is measured through the first measuring unit, the second measuring unit, and the third measuring unit that the temperature of the heating unit 110 decreases or the charging level of the raw material becomes excessively low, the temperature of the heating unit 110 may be increased to prevent battery shreds from being reduced to a reactant at a low temperature. In addition, by measuring the internal temperature of the heating unit 110 and measuring the temperature of the exhaust gas emitted from the battery shreds, a phenomenon in which the exhaust gas accumulates and clogs a pipe may be prevented in advance.

In one embodiment, the integrated control unit may control the monitoring unit to adjust the temperature of the heating unit to be controlled within a range of 800 to 1,400 °C. Specifically, the integrated control unit may adjust the temperature of the heating unit 110 to be controlled within a range of 1,200 to 1,400 °C based on a signal detected from the monitoring unit.

The temperature of the heating unit 110 may be controlled by the third measuring unit and the second measuring unit measuring the temperature of the exhaust gas and the temperature of the furnace. In this case, the temperature of the heating unit 110 may be maintained at a uniform temperature, and clogging of the piping unit due to cooling of dust in the piping unit may be prevented, thereby enabling normal operation.

In another embodiment, the high-temperature reduction apparatus 10 may be implemented in a form of a horizontal furnace rather than a vertical furnace, and may be appropriately changed according to a design change of a process.

Hereinafter, preferred embodiments and comparative examples of the present invention will be described. However, the following examples are only preferred embodiments of the present invention, and the present invention is not limited to the following examples.

### <Experimental Example 1>: Reduction rate of raw material charging level according to temperature

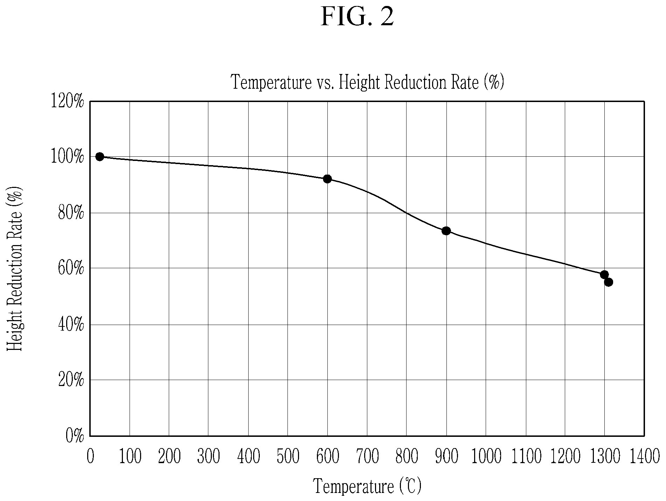

FIG. 2 illustrates the height reduction rate of the raw material charge according to temperature.

Referring to FIG. 2, shown are values of the height of the raw material measured by the first measuring unit while raising the temperature to a target temperature of 1,310 °C after filling the furnace with 100% of the raw material. Through this measurement, a change in characteristics according to the temperature of a burden (charging material) for the raw material may be checked. Specifically, a predetermined time is actually required for the raw material to become a reactant, during which the target temperature is maintained and sufficient heat is transferred to the inside of the furnace.

### <Experimental Example 2>: Control of clogging of the piping in the environmental treatment unit according to the control of the raw material charging level

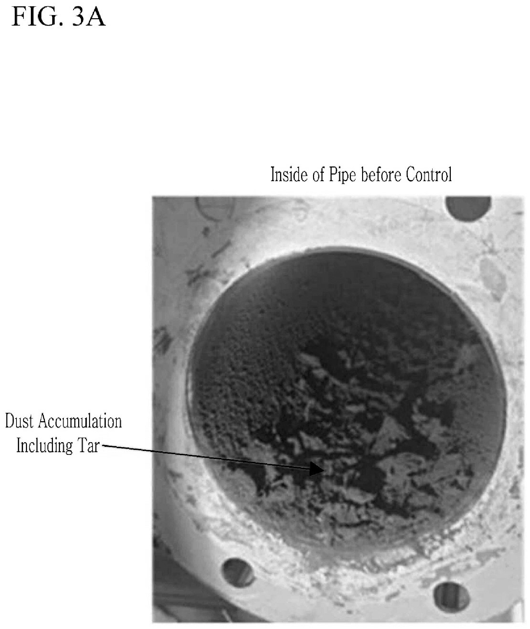

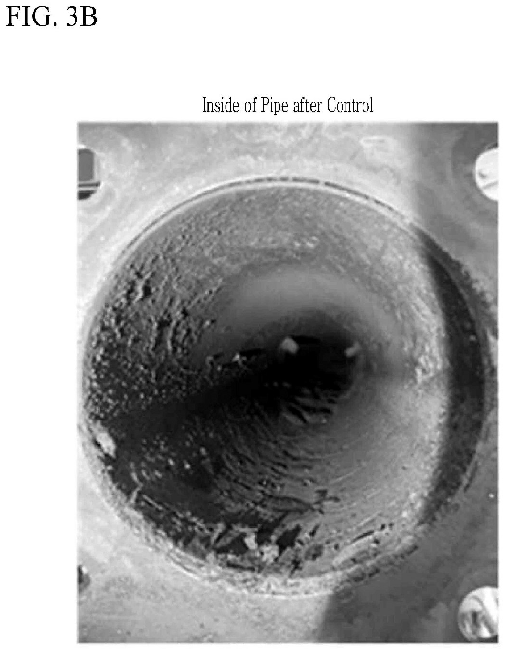

FIGS. 3a and 3b are photographs of a pipe connected to an environmental treatment unit.

FIG. 3a is a photograph showing an inside of a pipe before controlling a raw material charging height to an appropriate level, and FIG. 3b is a photograph showing the inside of the pipe after controlling the raw material charging height to be continuously maintained at an appropriate level, specifically, at about 70 to 80% based on 100% of a total of the heating unit 110. Referring to FIG. 3a, it may be confirmed that dust accumulation such as tar is accumulated inside the pipe. Referring to FIG. 3b, it may be confirmed that exhaust gas is easily discharged without dust accumulation such as tar inside the pipe. Through this, it was confirmed that clogging of the pipe may be prevented by controlling the charging level of the raw material.

### <Experimental Example 3>: Reactant recovery status according to control of raw material charging level

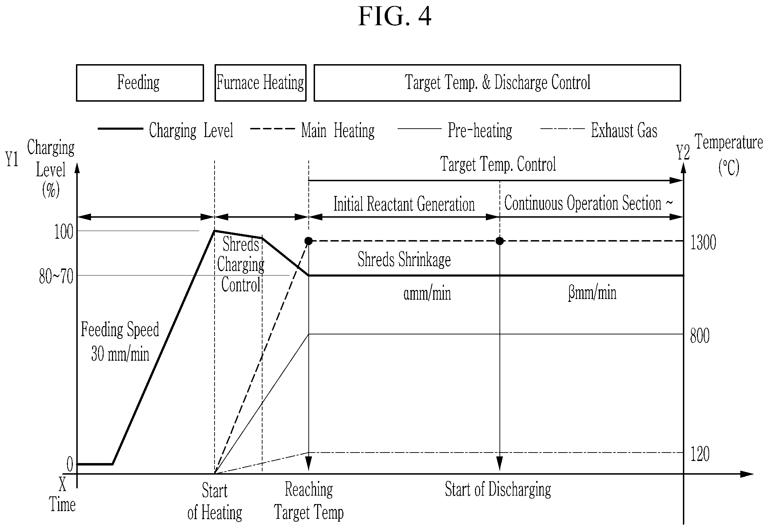

FIG. 4 is a graph showing changes in raw material charging height and temperature over time in a high-temperature reduction apparatus according to an embodiment of the present disclosure.

Referring to FIG. 4, in the case of battery shreds for which pre-treatment was smoothly performed, it may be confirmed that the raw material introduced from a charging unit is uniformly introduced at a rate of 30 mm/min. Further, after reaching a target temperature of 1,320 °C, the raw material reaches a heating unit and temperature control begins.

The temperatures of the first measuring unit and the second measuring unit are controlled to be maintained by the integrated control unit, and the level of the charging raw material fluctuates according to the shrinkage characteristics of the charging raw material. Here, it is very important to control the charging level to a point of 70 to 80%. If the raw material charging level becomes lower than the range of 70 to 80%, the heat of the preheating section is rapidly lost toward the top, and accordingly, the temperature fluctuation range of the preheating section increases. This may cause problems in the reaction of the raw material. Furthermore, if a situation occurs where the charging height of the raw material changes rapidly even at the time when the reactant is discharged, the temperature fluctuation range of the preheating section increases further.

As described above, in order to resolve an occurrence of temperature control deviation inside a furnace depending on a height of raw material, it is necessary to appropriately control charging level conditions considering both shrinkage characteristics of the raw material and temperature control discharge conditions so that a height of a charging unit may be controlled according to each condition. Accordingly, variability of reactants generated inside the furnace also increases, affecting a form of the reactants introduced into a subsequent process, which leads to a problem that a recovery rate decreases.

**[Table 1]**

| Charging control | Flake-shaped particles of 3000 µm or more | Droplets of 3000 µm or less | Clogging of environmental treatment piping |
|---|---|---|---|
| 80% or more | Occurrence | Reduction in ratio | O |
| 70 to 80% control | No occurrence | Good | X |
| 70% or less | Occurrence | Reduction in ratio | X |

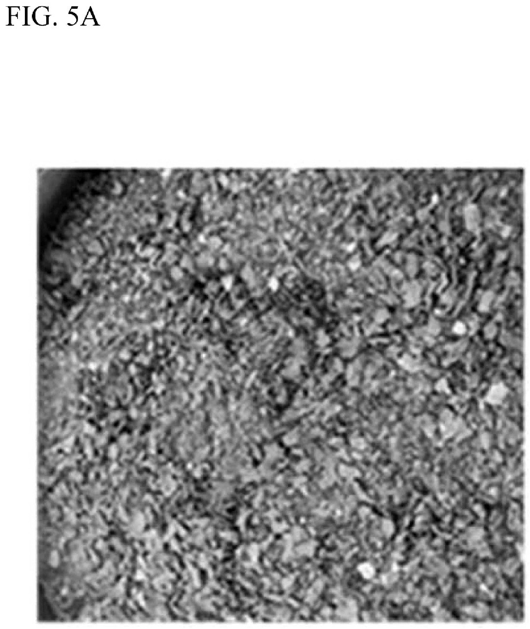

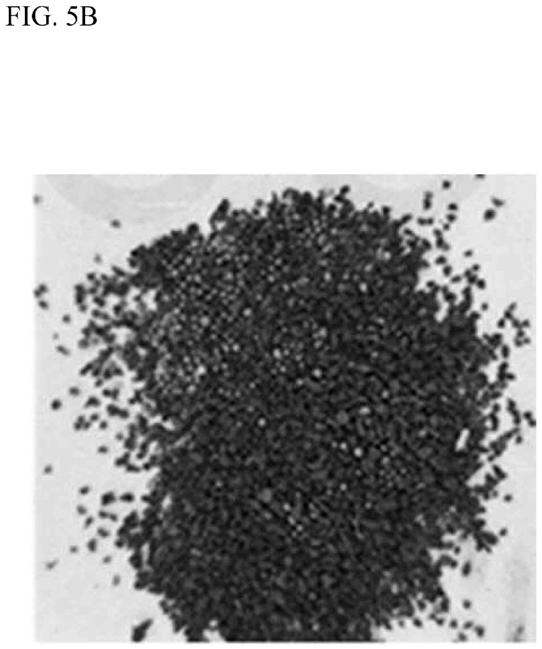

Table 1 below shows the forms of reactants affecting the recovery rate depending on whether or not the charging level of raw materials is controlled. It is confirmed that when the charging level of raw materials is controlled to 70 to 80% based on 100% of the total heating unit, flakes affecting the recovery rate are hardly generated, whereas under conditions of 80% or more or 70% or less, the temperature fluctuation range of the preheating section increases, causing a temperature change inside the furnace, thereby generating flake-shaped reactants. FIGS. 5a and 5b are photographs of recovered reactants according to one embodiment of the present disclosure.

FIG. 5a shows flake-shaped reactants recovered when the charging level is low, and FIG. 5b shows the shape of the reactants recovered when the charging level is maintained within the range of the present disclosure. Referring to FIGS. 5a and 5b, it was confirmed that by maintaining the charging level at an appropriate level, the shape of the recovered reactants is easily controlled.

Although preferred embodiments have been described in detail above, the scope of the present invention is not limited thereto, and various modifications and improvements made by those skilled in the art using basic concepts defined in the following claims also fall within the scope of the present invention.

## Claims

1. A high-temperature reduction apparatus for recycling waste batteries, comprising:
a charging unit for inputting raw material;
a heating unit for heating the raw material input from the charging unit;
a cooling unit for cooling a heat-treated product;
a discharging unit for discharging a reactant cooled by the cooling unit; and
a monitoring unit including a first measuring unit for measuring an in-furnace level of the raw material input by the charging unit and a second measuring unit for measuring a temperature of the raw material within the heating unit, the raw material being input by the charging unit.

2. The high-temperature reduction apparatus for recycling waste batteries according to claim 1, comprising an environmental treatment unit for treating exhaust gas generated by a reaction of the raw material in the heating unit.

3. The high-temperature reduction apparatus for recycling waste batteries according to claim 2, wherein the environmental treatment unit for treating the exhaust gas comprises a piping unit through which the exhaust gas generated from the heating unit passes.

4. The high-temperature reduction apparatus for recycling waste batteries according to claim 2, wherein the monitoring unit comprises a third measuring unit configured to measure a temperature of the exhaust gas.

5. The high-temperature reduction apparatus for recycling waste batteries according to claim 4, comprising an integrated control unit configured to detect a signal from the monitoring unit and control the input amount of the raw material of the charging unit or the temperature of the heating unit.

6. The high-temperature reduction apparatus for recycling waste batteries according to claim 5, wherein the integrated control unit is configured to control the charging unit to additionally input the raw material when the temperature of the exhaust gas is measured by the third measuring unit to be 120 °C or less.

7. The high-temperature reduction apparatus for recycling waste batteries according to claim 5, wherein the integrated control unit is configured to control the charging unit to additionally supply the raw material when the first measuring unit measures that the charging level of the raw material is 70% to 80% or less based on 100% of the total height of the heating unit.

8. The high-temperature reduction apparatus for recycling waste batteries according to claim 7, wherein the integrated control unit controls the temperature of the heating unit such that a flake-shaped reactant of 3,000 µm or more discharged through the discharging unit is not generated.

9. The high-temperature reduction apparatus for recycling waste batteries according to claim 1, wherein the first measuring unit measures the level of the raw material based on at least one selected from the group consisting of ultrasonic waves, LiDAR, and radar.

10. The high-temperature reduction apparatus for recycling waste batteries according to claim 1, comprising: a pre-heat treatment section for preheating the raw material introduced from the charging unit; and a high-temperature heat treatment section for heating the raw material to a temperature higher than a temperature of the pre-heat treatment section, wherein the high-temperature heat treatment section includes a heat treatment section in which heat treatment of the raw material is performed in a temperature range of 1,150 to 1,400 °C.

11. The high-temperature reduction apparatus for recycling waste batteries according to claim 1, wherein the high-temperature heat treatment section comprises two or more heat treatment sections in a vertical or horizontal direction.

12. The high-temperature reduction apparatus for recycling waste batteries according to claim 10, comprising a space portion in at least a partial region of the pre-heat treatment section, wherein the raw material is not filled in the space portion.

13. The high-temperature reduction apparatus for recycling waste batteries according to claim 1, wherein the raw material is input into the charging unit at a rate of 15 to 35 mm/min.

14. The high-temperature reduction apparatus for recycling waste batteries according to claim 1, wherein the integrated control unit controls the monitoring unit such that the temperature of the heating unit is controlled within a range of 800 to 1,400 °C.

15. The high-temperature reduction apparatus for recycling waste batteries according to claim 10, wherein the second measuring unit comprises a plurality of units and measures the temperatures of the pre-heat treatment section and the high-temperature heat treatment section, respectively.
